# EUROPEAN PATENT APPLICATION

(11) **EP 3 967 131 A1**
(43) Date of publication of application: **16.03.2022**
(21) Application number: 21195941.6
(22) Date of filing: 10.09.2021
(51) Int. Cl.: A01F 25/13, A01F 25/16

(54) **COVER SHEET ASSEMBLY, SET OF REEL SUPPORTS, A SILAGE COMPRISING ASSEMBLY AND SET AND METHOD FOR COVERING A SILAGE**

(30) Priority: 10.09.2020 NL 2026443; 13.01.2021 NL 2027308
(71) Applicant: Jan Sake Bosch Holding B.V., 9008 SV Reduzum (NL)
(72) Inventor: Bosch, Jan Sake, 9008 SV Reduzum (NL); Hegg, Guido Walter, 9008 SV Reduzum (NL)
(74) Representative: Arnold & Siedsma

(57) **Abstract**

The invention relates to a system comprising a cover sheet assembly and at least one set of static reel supports for a silage, the cover sheet assembly comprising:

- two wall supports,

- a central support comprising a transverse beam extending in a second direction, at least two reel supports and at least one drive to move the central support between a proximal position and a distal position;

- movement means that are configured for moving the assembly along the length of the silage walls;

and the at least one set of static reel supports comprising:

- a first reel support that is placeable on a first silage wall and that is configured to support a first end portion of a silage reel;

- a second reel support that is placeable on a second silage wall that is opposite from the first silage wall in the second direction and that is configured to support an end portion and/or a flange of the silage reel that is opposite the first end portion.

wherein the cover sheet assembly and the set of static reel supports are adapted to function in conjunction with each other.

The invention further relates to a method for covering and uncovering a silage.

## Description

The invention relates to a cover sheet assembly, a set of static reel supports, a silage comprising the assembly and the set and a method for covering a silage

Assemblies for covering and uncovering a storage, such a silage for cattle feed, with a cover sheet are known from practice. Such assemblies comprise a carriage with wheels that is moveable along the longitudinal side walls of a silage. The carriage further comprises a reel that extends over the width of the silage and which can be provided with a cover sheet for covering the storage space between the silage walls. After covering or uncovering the silage, the assembly with respectively a completely detached cover sheet or a completely rolled-up cover sheet, can be transferred to a different silage.

A disadvantage is that the cover sheet must always be either completely detached or completely rolled-up before transferring the assembly to a different silage. As a result, the assembly can only be used on a single silage during for example a feeding mode, in which the cover sheet is only partially rolled up. This occurs especially when a silage is used on a daily or weekly basis to retrieve part of the stored feed from the silage.

Therefore, there is a need for an assembly that is transferrable between silages without the need to completely detach or roll up the cover sheet.

The invention is aimed at providing an improved assembly in which this disadvantage is obviated or at least significantly reduced.

To this end, the invention provides a system comprising a cover sheet assembly comprising and at least one set of static reel supports for a silage, the cover sheet assembly comprising:
- two wall supports, wherein each wall support is configured to be placed on a wall of a silage and to be moveable in a first direction along a length thereof;
- a central support that is moveably connected to the wall supports, the central support comprising:
   - a transverse beam extending in a second direction;
   - at least two reel supports that are positioned at or near opposite ends of the transverse beam and that are configured to releasably carry a reel;
   - at least one drive that is configured to move the central support and the reel supports in a third direction between a proximal position and a distal position;
- movement means that are configured for moving the assembly along the length of the silage walls;
and the at least one set of static reel supports comprising:
- a first reel support that is placeable on a first silage wall and that is configured to support a first end portion of a silage reel;
- a second reel support that is placeable on a second silage wall that is opposite from the first silage wall in the second direction and that is configured to support an end portion and/or a flange of the silage reel that is opposite the first end portion.
wherein the cover sheet assembly asnd the set of static reel supports are adapted to function in conjunction with each other.

It is noted that the application refers to a multi-silage having at least one common side wall, or briefly multi-silage or multi-silage system. With respect to this application, a multi-silage (system) is referred to as describing a number of adjacent silages that each have at least one side wall in common (i.e. shares at least one side wall) with the adjacent silage. Such a multi-silage may include two or a plurality of silages, each of which have in common that each silage shares at least side wall with the adjacent silage.

An advantage of the assembly according to the invention is that the reel supports are configured to releasably carry a reel. This allows a reel to be lowered onto the silage, after which the assembly can be moved to a different silage to work with a reel positioned on that specific silage. In other words, each silage is provided with a (i.e. its own) reel and cover sheet, and the assembly is transferred between the silages to operate the reel of that specific silage.

Another advantage of the assembly according to the invention, is that the assembly can be used in conjunction with multiple silages that share a common wall. In such a case, each silage is provided with its own reel, which is positioned on the silage walls, preferably by means of a set of static reel supports according to invention as described in this application. This means the reel partially extends above the common silage wall, which may obviate passage of the assembly (that shares the same common wall). However, due to the fact that the central support of the assembly is moveable in the vertical (i.e. third) direction, the central support and a (currently supported) reel thereon can be lifted to a distal position in which it is relatively far above the silage wall on which the assembly is positioned. This allows the assembly to pass the reel of the adjacent silage (that supports on the common side wall) by lifting the reel on the assembly over the passively supported reel.

In other words, a set of static reel supports carrying a reel on a first silage can be bypassed by the assembly according to the invention positioned on a second silage by lifting the central support and, if present, a reel, over the reel on the first silage. This makes it possible to provide a multitude of silages sharing common walls, while still allowing the use of a single assembly to operate reels on all of the multitude of silages.

By combining the assembly and the set of supports for a silage that are adapted to function in conjunction with each other, only a single assembly is necessary to cover multiple silages having common side walls. The main advantage is that the assembly is capable of bypassing a static reel support positioned on the same wall without interfering with each other. This means that silages having common side walls can be provided with a single assembly for covering and uncovering a sheet and one or more sets of static reel supports for silages to support a sheet at which no activity is performed at that time. The assembly can easily be transferred between silages. As a result, only a single assembly is required for multiple silages, even silages having common or shared side walls.

An advantage of the set of static reel supports is that it provides an efficient way of storing and/or holding a reel with a cover sheet on a silage. This is especially true in situations in which the reel does not or only sporadically needs to be moved, such as in a feeding mode of a silage, in which the reel only needs to be moved once every few days or even once a week. It also holds for a storage mode in which the silage is covered with a sheet and does not need to be opened.

Another advantage of the set of static reel supports is that the reel supports efficiently transfer (and distribute) the weight of the reel to the walls of the silage. From practice, it is known to position a reel on a silage wall, which leads to a single point load on the silage wall. The set of static reel supports a larger part of the reel and transfer the load to the silage wall in a more distributed manner, that is, over a larger surface of the silage wall. Therewith, the load on the silage wall is reduced, which improves its operational time.

Yet another advantage is that, due to the supports, the reel itself incurs less damage than in the known situation in which the reel is positioned directly on the silage wall.

The set of static reel supports further has the advantage that, when combined with the assembly according to the invention, a multi-silage with common side walls can be used. The set of static reel supports provides that the reel, when viewed in the third direction, is positioned at a distance from the silage wall. This allows the assembly, or at least the base of the assembly, to move underneath the reel on the set of static reel supports. By virtue of the fact that the central support of the assembly according to the invention is adjustable in the third direction (i.e. in height), the reel on the assembly can be lifted sufficiently to pass over the reel on the set of static reel supports. Therewith, it becomes possible to provide a reel on each of the silages of the multi-silage system, while still allowing the assembly to be freely moveable over the common side wall of those silages.

As a result, the costs of a silage are significantly reduced, because for each adjacent silage, a side wall is obviated.

In an embodiment according to the invention, the wall supports comprise a base part that extends over a predetermined length in the first direction and an upright part that extends from the base in the third direction towards an upright end.

An advantage of providing a base part with a thereto connected upright part, is that it provides a stable and efficient support, while simultaneously requiring a relatively low amount of material. The amount of material is for example less than for supports made of an A-frame.

In an embodiment according to the invention, the upright is connected to a side wall of the base support facing the other base support.

An advantage of this embodiment according to the invention, is that the upright parts are positioned slightly inward with respect to the silage walls on which the wall supports are positioned. This allows the wall supports to bypass a reel that is positioned, for example by means of a set of static reel supports, on the wall of the silage, while simultaneously holding the reel in position for covering and uncovering the silage with a cover sheet.

In an embodiment according to the invention, a length of the central support, when viewed in the second direction, may be adjustable.

An advantage of providing a central support of which the length is adjustable allows the assembly to be used on silages with different widths. In other words, the silage may be used on a silage with a certain width and subsequently be moved to a silage with a larger or smaller width on which it can also be used.

In an embodiment according to the invention, the transverse beam may be an adjustable beam and the central support is adjustable by adjusting the transverse beam, and wherein the transverse beam preferably is a telescopic beam.

The central support is preferably adjusted by adjusting the transverse beam, because this provides an efficient and robust way of varying the width of the central support. Moreover, it is preferred that the transverse beam is a telescopic beam, which allows for an even easier adjustment by increasing or decreasing the length of the telescopic beam.

In an embodiment according to the invention, the movement means may be wheels, each wheel comprising a wheel hub having a wheel hub axis, wherein the wheel hub is configured to support on a silage wall, and two flanges that are positioned on opposite sides of the wheel hub and that extend radially outwardly from the wheel hub axis, wherein the flanges are configured to at least partially extend along a silage wall, and wherein the flanges are further configured to restrict movement in the second direction.

An advantage of providing wheels with flanges is that the sidelong movement, that is movement in the second direction, is substantially prevented by the flanges. This prevents the assembly from disengaging from the wall and, potentially, from falling from the silage wall on which it is positioned.

In an embodiment according to the invention, the wheel hubs are provided with a roughened surface that allows the wheels to move onto an inclined surface, wherein the inclined surface preferably has an angle in the range of less than 45°, more preferably in the range of 3° - 30° and more preferably in the range of 5° - 20°.

By providing the wheel hubs with a roughened surface, which may comprise an integral profile, a coating or even a separate wheel hub layer, the wheels are able to crest an incline, for example an incline of a set of static reel supports positioned on the wall.

In an embodiment according to the invention, each wall support comprises at least two wheels, wherein at least one wheel is positioned at or near each outer end of the base part.

An advantage of providing wheels at outer ends of the base, the stability of the assembly with regard to toppling is advantageously increased. Another advantage is that the weight distribution over the base is further improved, which reduces stress on the wall supports.

As an alternative, or in addition, to providing flanges guiding elements, such as guiding wheels, can be provided to the wall. Such embodiment of the invention is particularly advantageous in case of relatively thick walls, for example about 25 cm or even more. The guiding wheels are preferably adjustable. Also preferably, the wheel shafts extend in a substantially vertical direction.

In an embodiment according to the invention, the assembly comprises a reel that is removably positioned on the reel supports.

An advantage of providing a removable reel is that the reel can be placed on a silage, for example on separate silage supports, after which the assembly can be moved to a different, often adjacent silage, to act on a reel of that specific silage. In other words, each silage can be outfitted with a reel, which allows the silages to be operated independently from each other in different operational modes. This may for example include providing one silage in filling mode (i.e. completely open) with use of the assembly, whereas an adjacent silage is operated in removal mode (i.e. the silage is partially covered by a cover with reel).

Another advantage is that the reel may be switched out for a different reel without having to replace the assembly. This first of all allows a different width or reel to be placed, which allows the assembly (in conjunction with the width adjustability thereof) to be used on silages with different widths. In addition, the reel can be exchanged if it has worn out.

In an embodiment according to the invention, the reel comprises a tube or rod that is configured to hold a cover sheet and two flanges that are connected at or near outer ends of the rod or tube and that extend radially outwardly from the tube or rod. The reel further comprises two connector ends that are positioned adjacent the flanges on a side opposite the side that is connected to the tube or rod, wherein the connector ends are operatively connectable to a reel drive unit.

An advantage of providing a reel with connector ends positioned outside the flanges is that the reel can be lifted and rotated by means of the connector ends. This for example allows the reel to be placed on a separate support by placing the flanges thereon.

In an embodiment according to the invention, the reel connector ends may comprise one or more of: a disc comprising openings configured to cooperate with a mesh gear, a mesh gear, a friction disc that is configured to cooperate with drive rolls by means of friction, or a tube with internal thread or teeth that is configured to cooperate with a projection with matching external thread or teeth.

An advantage of the abovementioned embodiments of the connector ends is that each of these provide an efficient, reliable transmission of the power of a drive unit. Especially the mesh gear is a low-maintenance and reliable transmission that can be manufactured at low cost.

In an embodiment according to the invention, the reel may comprise a tube or rod that is configured to hold a cover sheet and two reel flanges that are connected or integrally formed near outer ends of the rod or tube, wherein the flanges are provided with connection means, such as bolt openings, and wherein the reel further comprises two reel transmission parts that are positioned at outer ends of the reel, wherein each reel transmission part comprises a tubular base part having an inner diameter that is larger than an outer diameter of the reel tube and, preferably also larger than an outer diameter of the reel flanges, an end plate that covers a first end of the tubular base part and that is provided with connection means that are configured to cooperate with the connection means of the reel flanges for connection the transmission part and the reel, and wherein the tubular base part further comprises a flange that is positioned at a second end that is opposite the first end of the tubular base part, wherein the flange has an outer diameter that exceeds the outer diameter of the tubular base part.

It is noted that in this embodiment, the transmission part flanges are configured to support the reel on a set of static reel supports.

An advantage of this embodiment is that the transmission parts, which are subjected to the largest forces (and thus the largest wear) may be replaced independently from the reel tube or rod. This decreases the investment and maintenance costs.

Another advantage is that the transmission part may easily be switched for a transmission part that is provided with a different type of transmission to cooperate with the drive unit of the assembly. In other words, the transmission part of the reel can be adapted to the specific type of drive unit, and specifically the drive unit transmission, that is provided on the assembly.

Preferably, the end plate has a circular hole having a diameter that is substantially equal to an inner diameter of the reel tube. This allows an external holding device or drive to be inserted in the tubular base and/or the reel tube.

Preferably, an outer circumferential wall of the tubular base part is provided with openings that are configured to cooperate with the drive unit for driving a rotation of the reel. This provides an advantageous manner of connecting the reel to a drive unit for driving the rotation. It is noted that the openings may also be depressions, and the outer side of the tubular base part may form an alternating series of depressions and/or projections, for example to form a toothed gear.

In an embodiment according to the invention, the reel support comprises a reel drive unit that is operatively connectable to a reel to roll a cover sheet up on the reel and/or unroll a cover sheet from the reel.

The drive unit is preferably located near the reel in order to reduce the distance over which the drive force needs to be transferred.

Another advantage of providing the drive unit near the reel support, especially when positioned near the transverse beam, is that the drive unit compensates for the weight of the reel and the cover sheet provided thereon. Therewith the stability of the assembly is increased even further.

In an embodiment according to the invention, the reel drive unit comprises a drive or motor, two drive rollers that are spatially separated in the first direction, wherein the reel is configured to be positioned on the drive rollers, and transfer means, for example a transfer belt or transfer chain, that connects the drive unit to at least one of the drive rollers to drive a rotation of the drive rollers.

An advantage of providing two spatially distanced drive rollers is that the drive rollers provide an enhanced grip on the reel, which ensures that the reel can be rotated to roll up or off the cover sheet without the reel slipping.

Another advantage is that a drive belt or chain configuration allows for a continuous transmission of the drive to the reel.

In an embodiment according to the invention, the drive unit comprises a drive or motor and transfer means comprising a gear box that is connected to the reel, for example by means of a gear that is positioned near an end portion of the reel.

An advantage of providing a gear box is that the speed of rolling and unrolling the cover sheet may be controlled in more detail. Moreover, the gear box may comprise number of gear wheels that are connectable to a gear wheel on the reel, such that an efficient and reliable power transmission is achieved.

In an embodiment according to the invention, each reel support comprises a reel arm that extends in a first direction from the transverse beam towards a reel arm end, wherein a reel end is positionable upon the reel arm.

An advantage of providing a reel arm is that sufficient space is created to hold the reel and the cover sheet without interfering with the central support.

It is preferred that the motor is positioned at or near the transverse beam.

An advantage of this configuration is that the weight distribution of the reel supports is distributed evenly with regard to the connection on the transverse beam. As a result, the stability of the assembly is even further enhanced, which reduces the risk of toppling or falling over along the length of the silage wall. This is especially important when moving the assembly with a reel and a fully rolled up cover sheet.

In an embodiment of the assembly according to the invention, the reel support further comprises securing means for securing a reel to the reel support.

In order to prevent sidelong movement (i.e. in the first or second direction) of the reel, securing means are applied to the reel support and the reel. Preferably, the securing means are designed such that a rotation of the reel around its reel axis is not obstructed in any way.

In an embodiment of the system according to the invention, each of the reel supports comprises a U-shaped wall connector comprising a base wall and two side walls that extend substantially perpendicular from the base surface to a side wall end portion to form an inner space, wherein the inner shape is configured to hold a top portion of a silage wall and an upright that extends away from the U-shaped wall connector in a direction substantially opposite from the side walls towards an upright end, wherein the upright end comprises a preform for supporting an end portion of a reel.

It is noted that the inner shape of the inner space is defined by the side walls and the base wall, most notably the base surface of the base wall.

An advantage of providing the U-shaped wall connector is that a relatively large support surface is provided that is in contact with the silage wall. Therefore, the load on the wall is distributed over a larger area, reducing the stress on the silage wall.

Another advantage is that the preform allows a larger support surface for the reel, which reduces the load on the static reel supports and the reel itself.

In an embodiment, a base wall that is configured to be in contact with an upper end of a silage wall, for example the base wall of the U-shaped wall connector, has a predetermined thickness over substantially an entire surface, wherein the outer ends of the base wall, seen in the first direction (i.e. the longitudinal direction of the silage walls on which the base wall is to be placed), have a sloped surface. The sloped surface preferably has an angle with a top surface of the silage wall in the range of less than 45°, more preferably in the range of 3° - 30° and even more preferably in the range of 5° - 20°.

An advantage of providing a sloped surface is that the assembly can more easily roll up and over the base surface of the static wall supports.

The invention further relates to the use of a set of static reel supports in system according to the invention, the set comprising:
- a first reel support that is placeable on a first silage wall and that is configured to support a first end portion of a silage reel;
- a second reel support that is placeable on a second silage wall that is opposite from the first silage wall in the first direction and that is configured to support an end portion of the silage reel that is opposite the first end portion.

The static reel supports offer similar effects and advantages as the assembly according to the invention and are configured to cooperate with the assembly to provide an improved silage system. It is however noted that the set of static reel supports may be used separately from the assembly as well.

The invention also relates to a silage system, preferably a multi-silage system, the system comprising the steps of:
- at least one assembly according to the invention;
- at least two silages, wherein each two adjacent silages of the at least two silages share a common wall.

The silage system according to the invention has similar advantages and effects as the system according to the invention. In addition, the silage system according to the invention may be freely combinable with the abovementioned embodiments for the system according to the invention.

An advantage of the silage system according to the invention is that multiple silages with common side walls can be used. The set of static reel supports provides that the reel, when viewed in the third direction, is positioned at a distance from the silage wall. This allows the assembly, or at least the base of the assembly, to move underneath the reel on the set of static reel supports. By virtue of the fact that the central support of the assembly according to the invention is adjustable in the third direction (i.e. in height), the reel on the assembly can be lifted sufficiently to pass over the reel on the set of static reel supports. Therewith, it becomes possible to provide a reel on each of the silages of the multi-silage system, while still allowing the assembly to be freely moveable over the common side wall of those silages.

As a result, only a single assembly is required for covering and uncovering a multitude of silages. This significantly reduces the costs of the silage system. In addition, the silages of the silage system may be provided adjacent to each other and sharing at least one side wall. Therewith, one side wall is obviated for each silage in the silage system, reducing costs even further.

The invention also relates to a method for covering and uncovering a silage, the method comprising:
- providing:
   - a system according to the invention;
   - at least two silages, wherein each two adjacent silages of the at least two silages share a common wall;
- positioning the at least one set of static reel supports on two side walls of a first of the at least two silages;
- providing a reel on the set of static reel supports, wherein the reel may be provided with a cover sheet;
- positioning the assembly on a second silage of the at least two silages that is adjacent the first silage; and
- operating the assembly.

The method according to the invention has similar advantages and effects as the system according to the invention and the silage system according to the invention. In addition, the method according to the invention may freely be combinable with the abovementioned embodiments for the system and/or the silage system according to the invention.

In an embodiment of the method according to the invention, the method additionally comprises the steps of positioning a second set of static reel supports on the second assembly or preferably the second silage, transferring the reel from the assembly to the second set of static reel supports and transferring the assembly to the first silage to operate the assembly on the first silage.

In an embodiment of the method according to the invention, the method additionally comprises one or more of the steps of covering and/or uncovering the second silage by operating the assembly and moving the assembly, during operating, passed at least one static reel support that is positioned on the common wall between the silages.

Further advantages, features and details of the invention are elucidated on the basis of preferred embodiments thereof, wherein reference is made to the accompanying drawings, in which:
Figure 1 shows a perspective view of an example of a cover sheet assembly according to the invention with a reel;
Figure 2 shows the example of figure 1 with a reel;
Figure 3 shows a front view of the example of figure 1;
Figure 4 shows a side view of the example of figure 1;
Figures 5a and 5b show a perspective view of a reel according to the invention;
Figure 6 shows a view of an example of a static reel support according to the invention;
Figure 7 shows a perspective view of the example of figure 6;
Figure 8 shows a front view of an example of a static reel support;
Figure 9 shows a side view of an example of a static reel support;
Figure 10a shows a perspective view of an example of a silage system according to the invention with an example of a cover sheet assembly according to the invention; and
Figure 10b shows a further view of the silage and assembly according to figure 10a; and
Figure 11 shows a schematic view of a silage system with an assembly according to the present invention.

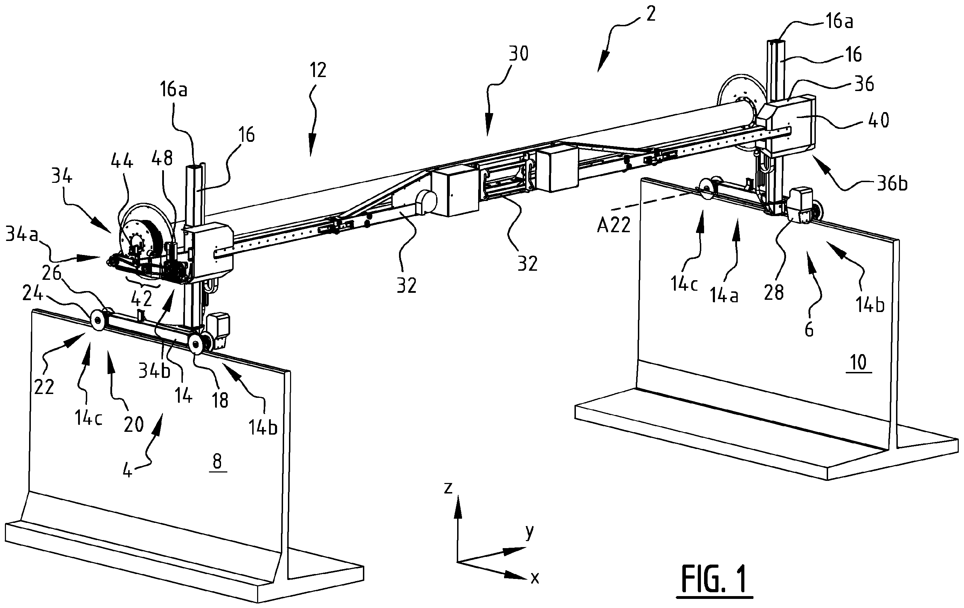

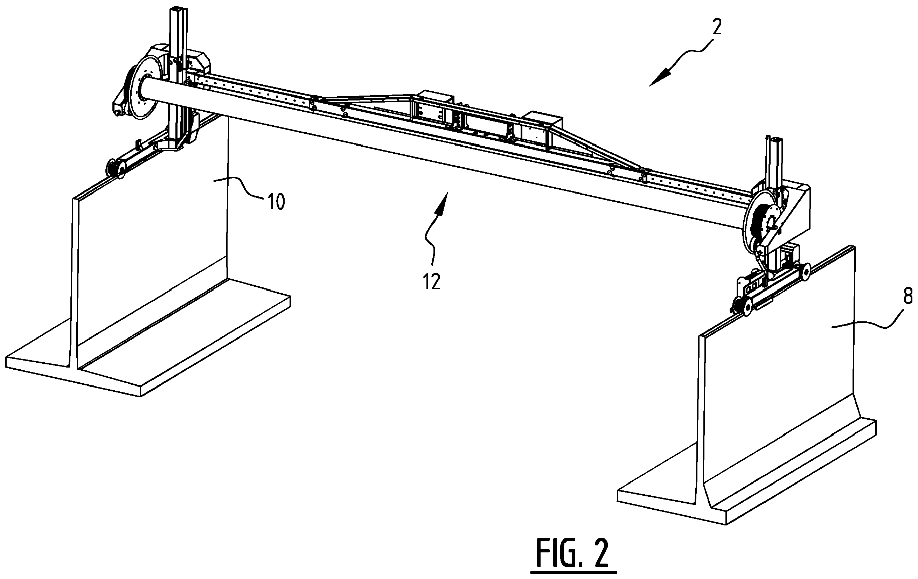

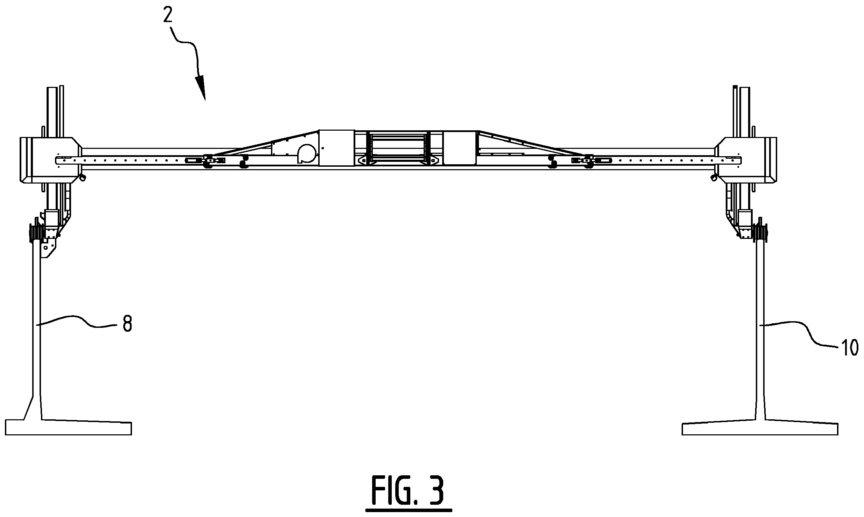

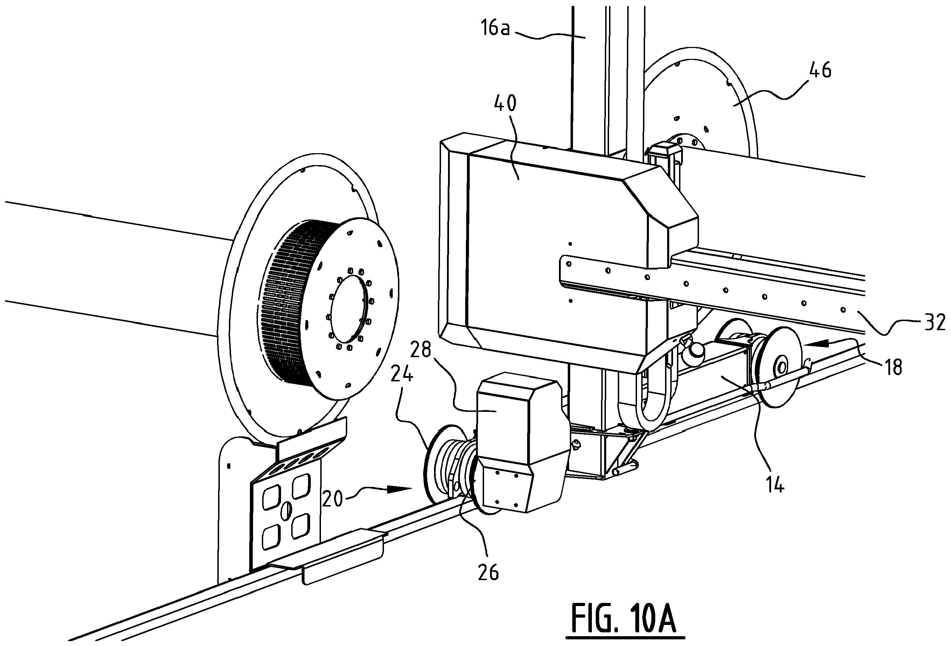

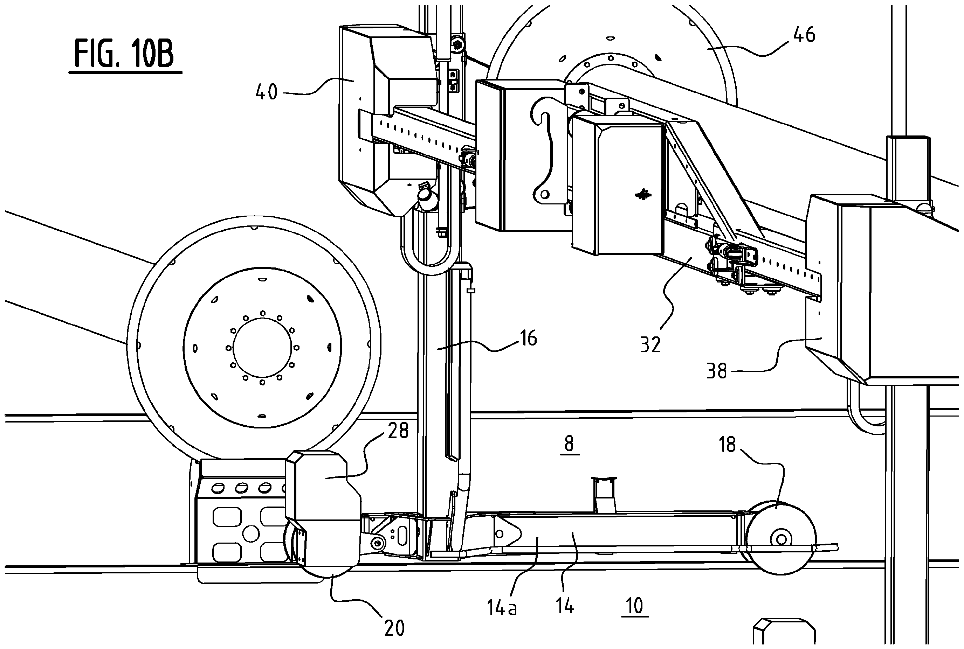

In an example of assembly 2 according to the invention (see figures 1 - 4 and 10a, 10b), assembly 2 comprises two wall supports 4, 6 that are placeable on respective side walls 8, 10 of silage 12. In this example wall support 4 comprises base 14 and upright 16. Base 14 extends in first direction x that, in use of assembly 2, equates with the longitudinal direction of the silage wall 8. Upright 16 is connected with base 14 at a side 14a and near outer end 14b thereof. Upright 16 extends upwards from base 14 in third direction z to upright end 16a. Base 14 is in this example further provided with two wheels 18, 20, which are connected at opposite ends 14b, 14c of base 14. Each wheel 18, 20 comprises central wheel hub 22 and flanges 24, 26 that are connected to end portions of central wheel hub 22. Flanges 24, 26 extend radially outward from central wheel hub 22 (and central wheel hub axis A22) and, in use of assembly 2, extend at least partially along side wall 8 of silage 12. This prevents or at least significantly reduces movement of wall support 4 in second direction y. Furthermore, wall support 4 is provided with drive motor 28 for moving assembly 2 along side walls 8, 10 of silage 12.

Similarly, wall support 6 comprises base 14 and upright 16. Base 14 extends in first direction x that, in use of assembly 2, equates with the longitudinal direction of the silage wall 8. Upright 16 is connected with base 14 at a side 14a and near outer end 14b thereof. Upright 16 extends upwards from base 14 in third direction z to upright end 16a. Base 14 is in this example further provided with two wheels 18, 20, which are connected at opposite ends 14b, 14c of base 14. Each wheel 18, 20 comprises central wheel hub 22 and flanges 24, 26 that are connected to end portions of central wheel hub 22. Flanges 24, 26 extend radially outward from central wheel hub 22 (and central wheel hub axis A22) and, in use of assembly 2, extend at least partially along side wall 8 of silage 12. This prevents or at least significantly reduces movement of wall support 6 in second direction y. Furthermore, wall support 6 is in this example also provided with drive motor 28 for moving assembly 2 along side walls 8, 10 of silage 12.

Assembly 2 further comprises central support 30, which is connected to wall supports 4, 6 and is moveable in third direction z with respect to wall supports 4, 6. Central support 30 comprises transverse beam 32 that in this example is telescopic beam 32, which allows central support 30, and therewith assembly 2, to be adapted in second direction y. Central support 30 further comprises two reel supports 34, 36, which are positioned near outer ends of transverse beam 32 and, in this example, two motors 38, 40 which are configured to move central support 30 up- and downwards (in third direction z) along uprights 16 of wall supports 4, 6. Although two motors 38, 40 are preferred, it is noted that single motor 38 would also suffice for moving central support 30.

Each reel support 34, 36 comprises reel drive unit 42 and reel support position 44 to releasably carry reel 46. In this example, each of the reel supports 34, 36 is connected to both transverse beam 32 as well as to upright 16 of associated wall support 4, 6. Each reel support 34, 36 extends from a connection position at transverse beam 32 substantially parallel to base 14 to a respective outer end 34a, 36a. Similarly, in this example each reel support 34, 36 extends in an opposite direction from the connection position at transverse beam 32 over distance in the first direction to respective second outer end 34b, 36b. In this example, reel motor 48 is supported by second outer end 34b, 36b of reel support 34, 36, whereas reel support position 44 is positioned at first outer end 34a, 36a.

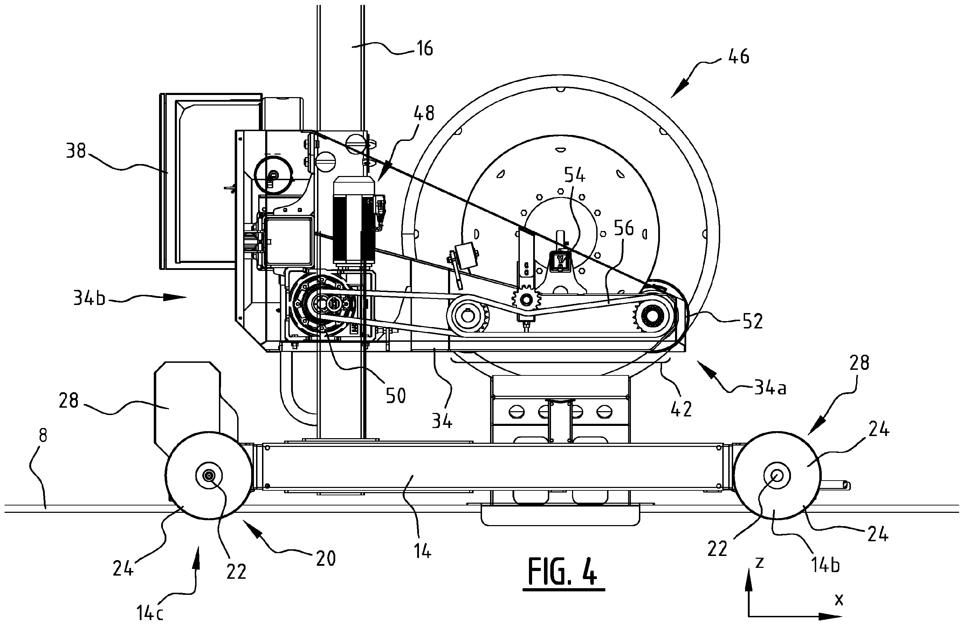

Drive unit 42 of reel support 34, 36 in this example further comprises two drive rollers 50, 52 that are spatially separated in the first direction and rotatably connected to reel support 34, 36. Reel 46 can be positioned on drive rollers 50, 52 (see figure 4) and secured by securing means 54, which in this example is securing rod 54. In order to rotate reel 46, reel motor 48 is connected to, in this example, both drive rollers 50, 52 by means of transmission belt 56.

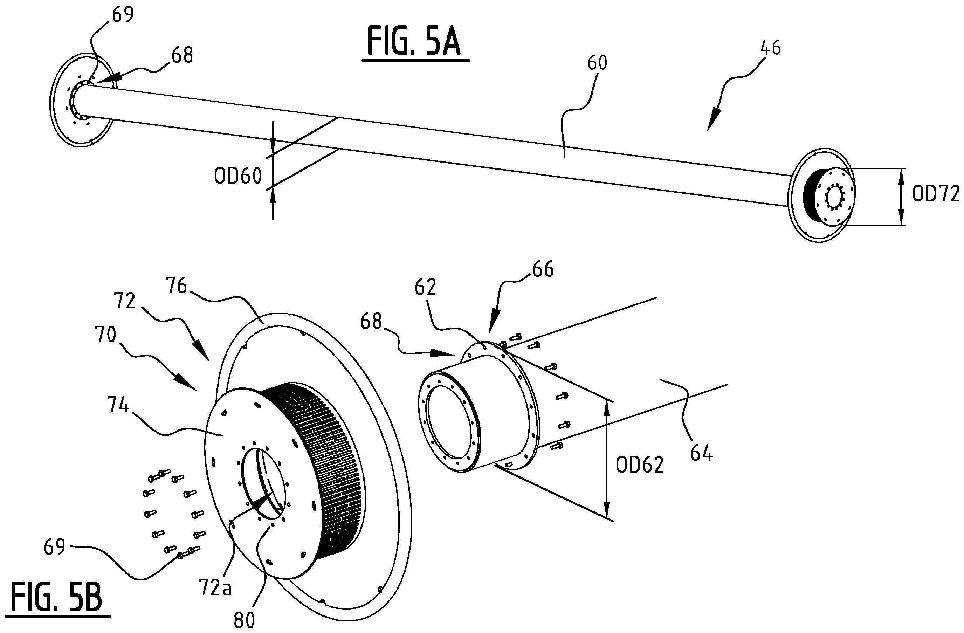

In an example of reel 46 (see figure 5), reel 46 comprises tube 60 having inner diameter ID₆₀ and outer diameter OD₆₀. Tube 60 is near each of its outer ends provided with flange 62, which extends from outer wall 64 of tube 60 towards flange perimeter 66. Flange 62 is provided with outer diameter OD₆₂. In this example, flange 62 is provided with a plurality of bore holes 68 for insertion of bolts 69. Reel 46 further comprises transmission part 70 that comprises tubular base part 72, end cap 74 that partially covers an end opening at first outer end 72a of tubular base part 72 and flange 76 which radially extends from tubular base part 72 near a second outer end 72b of tubular base part 72. Tubular base part 72 has inner diameter ID₇₂ that is larger that outer diameter OD₆₀ of tube 60 and even slightly larger than outer diameter OD₆₂. End cap 74 of tubular base part 72 of transmission part 70 is provided with opening 78 and a plurality of bore holes 80 that are configured to line up with bore holes 68 of tube 60 to connect tube 60 and transmission part 70 with bolts 69.

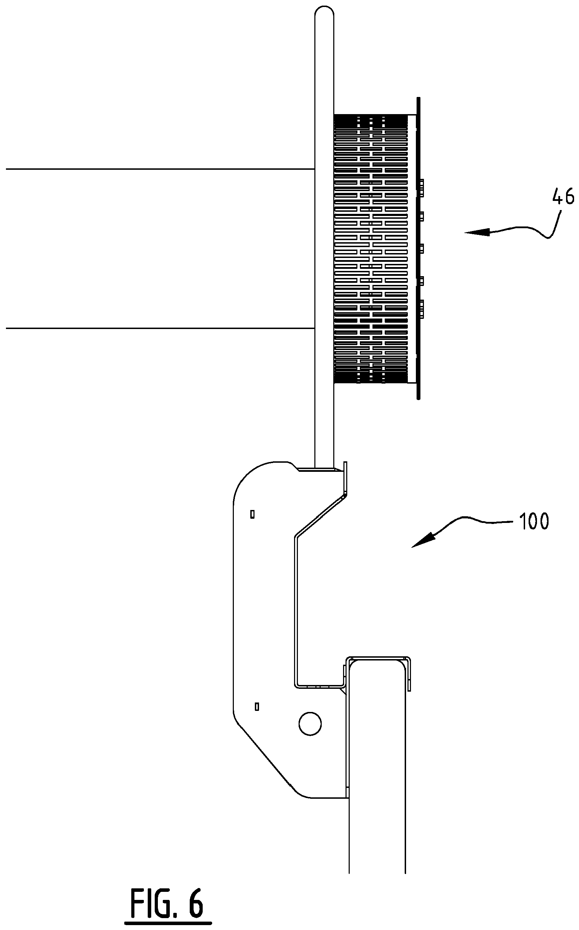

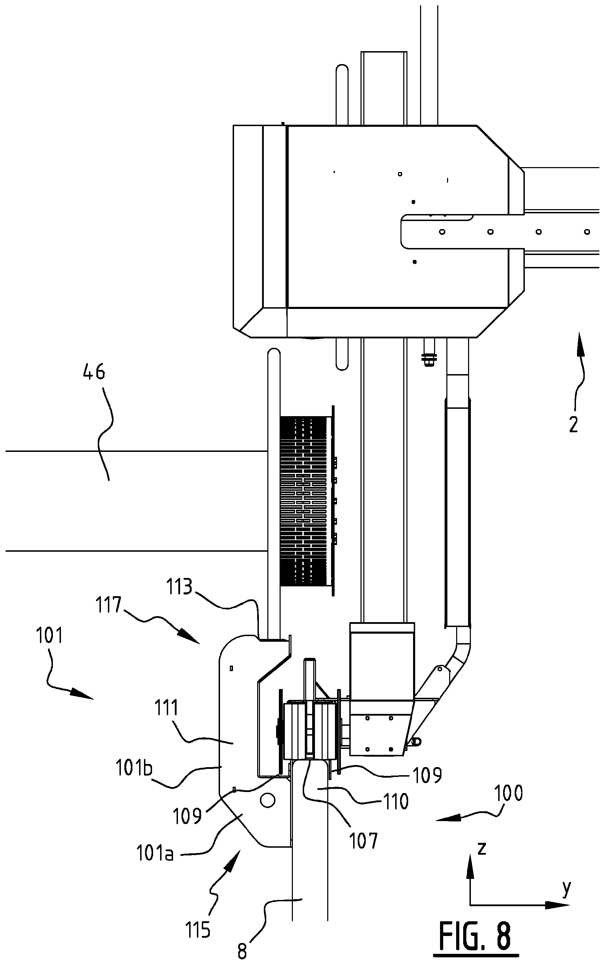

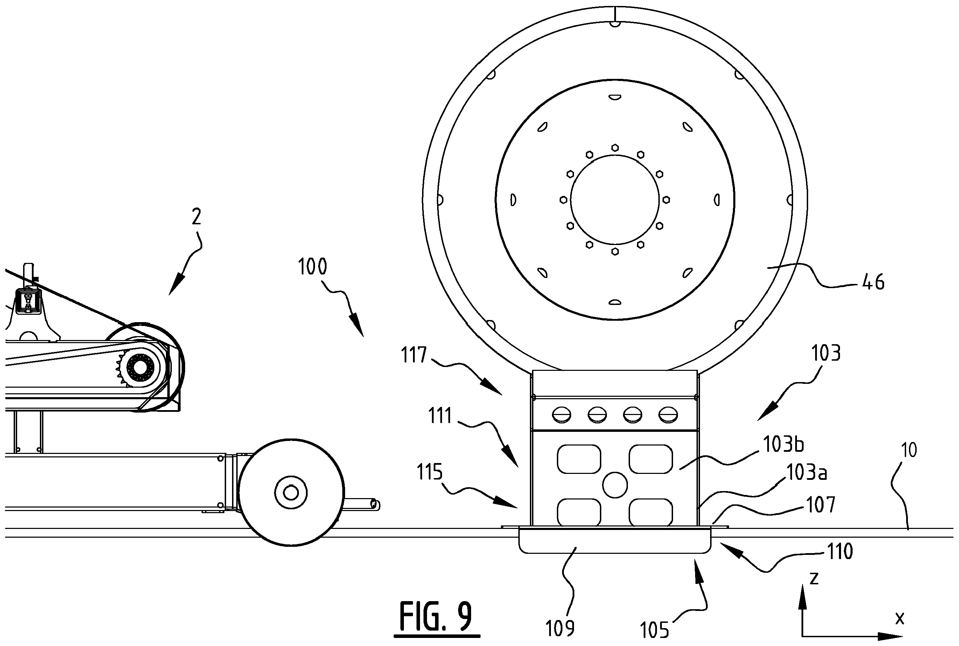

In an example of the set of static reel supports 100 comprises two static reel supports 101, 103 (see figures 6 - 9). Each static reel support 101, 103 comprises U-shaped wall connector 105 having base wall 107 and side walls 109 that extend perpendicularly away from base wall 107. Base wall 107 and side walls 109 define inner space 110 of U-shaped wall connector 105 that is configured to hold an upper part of one of silage walls 8, 10 of silage 12. Thus, in use static reel supports 101, 103 are positioned on top of, and partially over, silage walls 8, 10 with side walls 109 pointing downward (in the third direction) and base wall 107 resting on top of silage wall 8, 10. It is noted that base wall 107, when viewed in first direction x, which is the longitudinal direction, has sloped edges, which allow the wheels of assembly 2 to more easily roll onto and over base wall 107. Each static reel support 101, 103 further comprises upright 111 that extends upwardly from U-shaped wall connector 105 (and thus in an opposite direction with respect to side walls 109). Each upright 111 comprises a preform 113 in which reel 46 is positionable, such that reel 46 is supported by static reel supports 101, 103.

In this example, upright 111 extends from first end 115 to second end 117, which second end 117 is provided with preform 113. In this example, upright 111 extends from first end 115 in an upward, third direction z, and simultaneously in outward, second direction y away from silage wall 8, 10 on which assembly 2 is positioned. In essence, over a first part 101a, 103a, static reel support 101, 103 bends slightly outward and upward (i.e. under an angle with both second direction y and third direction z). Second part 101b, 103b extends substantially completely parallel with third direction z.

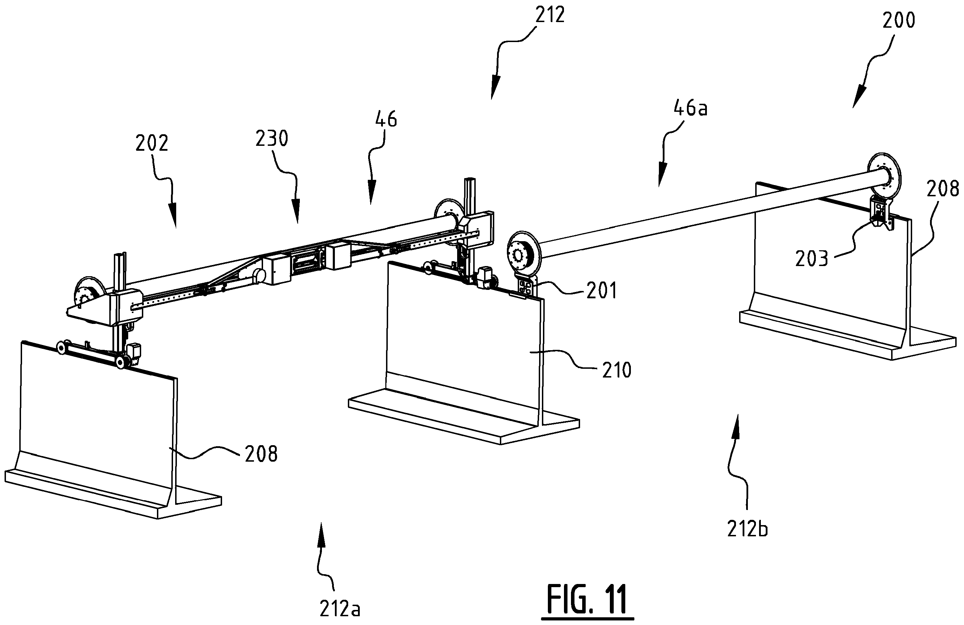

In an example of silage system 212 (see figure 11), silage system 212 comprises two silages 212a, 212b, with silage walls 208 and common silage wall 210. Silage 212 is provided with assembly 202 on silage 212a and with a set of static reel supports 200 on silage 212b.

In use, assembly 202 is used to roll a cover sheet up on reel 46 and/or unroll a cover sheet from reel 46. Thereto, assembly 202 is moved along longitudinal side walls 208, 210 of silage 212, while simultaneously the cover sheet is rolled up on or rolled down from reel 46 to respectively uncover or cover the feed in silage 212. When assembly 202 needs to pass static reel supports 201, 203, central support 230 is moved upwardly to the distal position, in which it lower side is higher than a top end of a flange positioned on the static reel support 201 of the second silage 212b. This allows assembly 202 to bypass static reel support 201 without conflicting with the reel 46a positioned thereon.

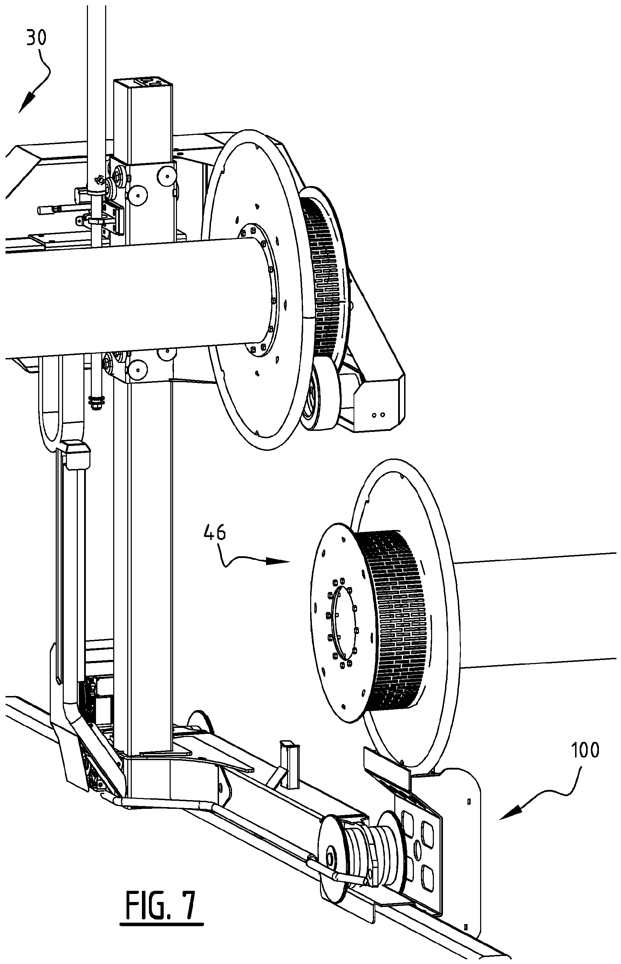

Assembly 202 can be lowered after passing static reel support 201 with reel 46a and central support 30, 230 (figure 7).

The present invention is by no means limited to the above described preferred embodiments thereof. The rights sought are defined by the following claims within the scope of which many modifications can be envisaged.

## Claims

1. System comprising a cover sheet assembly and at least one set of static reel supports for a silage, the cover sheet assembly comprising:
- two wall supports, wherein each wall support is configured to be placed on a wall of a silage and to be moveable in a first direction along a length thereof;
- a central support that is moveably connected to the wall supports, the central support comprising:
- a transverse beam extending in a second direction;
- at least two reel supports that are positioned at or near opposite ends of the transverse beam and that are configured to releasably carry a reel;
- at least one drive that is configured to move the central support in a third direction between a proximal position and a distal position;
- movement means that are configured for moving the assembly along the length of the silage walls;
and the at least one set of static reel supports comprising:
- a first reel support that is placeable on a first silage wall and that is configured to support a first end portion of a silage reel;
- a second reel support that is placeable on a second silage wall that is opposite from the first silage wall in the second direction and that is configured to support an end portion and/or a flange of the silage reel that is opposite the first end portion.
wherein the cover sheet assembly and the set of static reel supports are adapted to function in conjunction with each other.

2. System according to claim 1, wherein the wall supports comprise a base part that extends over a predetermined length in the first direction and an upright part that extends from the base in the third direction towards an upright end.

3. System according to any one of the preceding claims, wherein a length of the central support, when viewed in the second direction, is adjustable.

4. Systemaccording to claim 3, wherein the transverse beam is an adjustable beam and the central support is adjustable by adjusting the transverse beam, and wherein the transverse beam preferably is a telescopic beam.

5. System according to any one of the preceding claims, wherein the movement means are wheels, each wheel comprising:
- a wheel hub having a wheel hub axis, wherein the wheel hub is configured to support on a silage wall; and
- two flanges that are positioned on opposite sides of the wheel hub and that extend radially outwardly from the wheel hub axis, wherein the flanges are configured to at least partially extend along a silage wall, and wherein the flanges are further configured to restrict movement in the second direction.

6. System according to claim 5, when dependent on claim 2, wherein each wall support comprises at least two wheels, wherein at least one wheel is positioned at or near each outer end of the base part.

7. System according to any one of the preceding claims, wherein the assembly comprises a reel that is removably positioned on the reel supports, and wherein the reel preferably comprises:
- a tube or rod that is configured to hold a cover sheet;
- two flanges that are connected at or near outer ends of the rod or tube and that extend radially outwardly from the tube or rod;
- two connector ends that are positioned adjacent the flanges on a side opposite the side that is connected to the tube or rod, wherein the connector ends are operatively connectable to a reel drive unit.

8. System according to any one of the preceding claims, wherein the reel support comprises a reel drive unit that is operatively connectable to a reel to roll a cover sheet up on the reel and/or unroll a cover sheet from the reel.

9. System according to claim 8, wherein reel drive unit comprises a drive or motor and further comprises:
- two drive rollers that are spatially separated in the first direction, wherein the reel is configured to be positioned on the drive rollers;
- transfer means, for example a transfer belt or transfer chain, that connects the drive unit to at least one of the drive rollers to drive a rotation of the drive rollers.
or further comprises:
- transfer means comprising a gear box that is connected to the reel, for example by means of a gear that is positioned near an end portion of the reel.

10. System according to any one of the preceding claims, wherein each reel support comprises a reel arm that extends in a first direction from the transverse beam towards a reel arm end, wherein a reel end is positionable upon the reel arm.

11. System according to any one of the preceding claims, wherein each of the reel supports comprises:
- a U-shaped wall connector comprising a base wall and two side walls that extend substantially perpendicular from the base wall to a side wall end portion to form an inner space, wherein the inner space is configured to hold a top portion of a silage wall; and
- an upright that extends away from the U-shaped wall connector in a direction substantially opposite from the side walls towards an upright end, wherein the upright end comprises a preform for supporting an end portion and/or a flange of a reel.

12. Use of a set of static reel supports in a system according to any one of the preceding claims, the set comprising:
- a first reel support that is placeable on a first silage wall and that is configured to support a first end portion of a silage reel;
- a second reel support that is placeable on a second silage wall that is opposite from the first silage wall in the second direction and that is configured to support an end portion and/or a flange of the silage reel that is opposite the first end portion.

13. Silage system comprising:
- a system according to any one of the preceding claims;
- at least two silages, wherein each two adjacent silages of the at least two silages share a common wall.

14. Method for covering and uncovering a silage, the method comprising the steps of:
- providing:
- a system according to any one of the claims 1 - 11;
- at least two silages, wherein each two adjacent silages of the at least two silages share a common wall;
- positioning the at least one set of static reel supports on two side walls of a first of the at least two silages;
- providing a reel on the set of static reel supports, wherein the reel may be provided with a cover sheet;
- positioning the assembly on a second silage of the at least two silages that is adjacent the first silage; and
- operating the assembly.

15. Method according to claim 14, wherein the method additionally comprises the steps of:
- positioning a second set of static reel supports on the second silage;
- transferring the reel from the assembly to the second set of static reel supports; and
- transferring the assembly to the first silage to operate the assembly on the first silage, and or wherein the method additionally comprises one or more of the steps of:
- covering and/or uncovering the second silage by operating the assembly;
- moving the assembly, during operating, past at least one static reel support that is positioned on the common wall between the silages.
